(19) Europäisches Patentamt / European Patent Office / Office européen des brevets

(11) **EP 3 565 295 A1**

(12) **EUROPEAN PATENT APPLICATION**
published in accordance with Art. 153(4) EPC

(43) Date of publication:
06.11.2019 Bulletin 2019/45

(51) Int Cl.:
*H04W 16/28* (2009.01)     *H04W 72/04* (2009.01)

(21) Application number: 17888270.0

(86) International application number:
PCT/JP2017/046558

(22) Date of filing: 26.12.2017

(87) International publication number:
WO 2018/124027 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 27.12.2016 JP 2016254382

(71) Applicant: NTT DOCOMO, INC.
Chiyoda-ku
Tokyo 100-6150 (JP)

(72) Inventors:
• TAKEDA, Kazuaki
Tokyo 100-6150 (JP)
• TAKEDA, Kazuki
Tokyo 100-6150 (JP)
• MOROGA, Hideyuki
Tokyo 100-6150 (JP)
• NAGATA, Satoshi
Tokyo 100-6150 (JP)
• KAKISHIMA, Yuichi
Palo Alto, California 94304 (US)
• NA, Chongning
Beijing 100190 (CN)

(74) Representative: Hoffmann Eitle
Patent- und Rechtsanwälte PartmbB
Arabellastraße 30
81925 München (DE)

(54) **USER TERMINAL AND WIRELESS COMMUNICATIONS METHOD**

(57)    The present invention is designed to ensure the robustness of beams addressed to user terminals and/or to properly recover beams addressed to user terminals when beam forming is adopted. A user terminal according to the present invention has a receiving section that receives downlink control (DL) information via a downlink control channel (DCI), and a control section that monitors a plurality of DL control channel candidates in a search space and detects the DCI. The control section determines the resource units that constitute each of the plurality of DL control channel candidates based on at least one of information related to beams in which the plurality of DL control channel candidates are provided, the number of DL control channel candidates provided in the beams and the number of these beams.

FIG. 2A

EP 3 565 295 A1

FIG. 2B

**Description**

Technical Field

The present invention relates to a user terminal and a radio communication method in next-generation mobile communication systems.

Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "New RAT (Radio Access Technology)," "FX (Future generation radio access)," "LTE Rel. 13," "LTE Rel. 14," "LTE Rel. 15" or later versions) are under study.

In LTE Rel. 10/11, carrier aggregation (CA) to integrate multiple component carriers (CC) is introduced in order to achieve broadbandization. Each CC is configured with the system bandwidth of LTE Rel. 8 as one unit. In addition, in CA, multiple CCs under the same radio base station (eNB: eNodeB) are configured in a user terminal (UE: User Equipment).

Meanwhile, in LTE Rel. 12, dual connectivity (DC), in which multiple cell groups (CGs) formed by different radio base stations are configured in a UE, is also introduced. Each cell group is comprised of at least one cell (CC). Since multiple CCs of different radio base stations are aggregated in DC, DC is also referred to as "inter-base station CA (inter-eNB CA)."

In existing LTE systems (for example, LTE Rel. 8 to 13), a user terminal receives downlink (DL) control information (DCI) via downlink control channels (for example, PDCCH (Physical Downlink Control Channel), EPDCCH (Enhanced Physical Downlink Control Channel), MPDCCH (Machine type communication (MTC) Physical Downlink Control Channel), etc.).

Citation List

Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (for example, 5G, NR, etc.), research is being made to use frequency bands (for example, 3 to 40 GHz) higher than existing frequency bands in order to achieve high speeds and large capacity (for example, eMBB (enhanced Mobile Broad Band)). In general, distance-induced attenuation increases as the frequency band increases, and this makes it difficult to ensure coverage. Therefore, MIMO (also referred to as "Multiple Input Multiple Output," "massive MIMO," and so on) using a large number of antenna elements is under study.

In MIMO, in which a large number of antenna elements are used, it is possible to form beams (antenna directivities) by controlling the amplitude and/or the phase of signals to be transmitted or received via each antenna element (beam forming (BF)). For example, when antenna elements are arranged two-dimensionally, the higher the frequency, the greater the number of antenna elements that can be arranged in a predetermined area increases. As the number of antenna elements per given area increases, the beam width narrows (becomes narrower), and the beam forming gain increases. Therefore, when beam forming is adopted, propagation loss (path loss) can be reduced and coverage can be ensured even in high frequency bands.

Meanwhile, when using beam forming (for example, when it is assumed that a narrower beam is used in a high frequency band), the problem is how to ensure robustness against interruptions due to the mobility of user terminals, Doppler frequency, obstacles and so on (that is, how to continue using the beams the user terminals capture (without disconnection)). Also, how to recover interrupted beams is another problem.

The present invention has been made in view of the above, and it is therefore an object of the present invention to provide a user terminal and a radio communication method, whereby, when beam forming is adopted, it is possible to ensure the robustness of beams addressed to user terminals, and/or to properly recover beams addressed to user terminals.

Solution to Problem

According to one aspect of the present invention, a user terminal has a receiving section that receives downlink control information (DCI) via a downlink control channel (DL), and a control section that monitors a plurality of DL control channel candidates in a search space and detects the DCI, and the control section determines the resource units that constitute each of the plurality of DL control channel candidates based on at least one of information related to beams in which the plurality of DL control channel candidates are provided, the number of DL control channel candidates provided in the beams and the number of these beams.

Advantageous Effects of Invention

According to the present invention, it is possible to ensure the robustness of beams addressed to user terminals and/or properly recover beams addressed to user terminals when beam forming is adopted.

Brief Description of Drawings

FIGs. 1A and 1B are diagrams to show examples of beam forming;
FIGs. 2A to 2C are diagrams, each showing an example of a first search space configuration according to a first aspect of the present invention;
FIGs. 3A to 3C are diagrams, each showing an example of a second search space configuration according to the first aspect;
FIGs. 4A to 4C are diagrams, each showing an example of a third search space configuration according to the first aspect;
FIG. 5 is a diagram to show an example of a search space configuration according to an alternative example of the first aspect;
FIG. 6 is a diagram to show a first example of beam recovery according to a second aspect of the invention;
FIG. 7 is a diagram to show a second example of beam recovery according to the second aspect;
FIG. 8 is a diagram to show an example of a schematic structure of a radio communication system according to one embodiment of the present invention;
FIG. 9 is a diagram to show an example of an overall structure of a radio base station according to one embodiment of the present invention;
FIG. 10 is a diagram to show an example of a functional structure of a radio base station according to one embodiment of the present invention;
FIG. 11 is a diagram to show an example of an overall structure of a user terminal according to one embodiment of the present invention;
FIG. 12 is a diagram to show an example of a functional structure of a user terminal according to one embodiment of the present invention; and
FIG. 13 is a diagram to show an example hardware structure of a radio base station and a user terminal according to one embodiment of the present invention.

Description of Embodiments

Future radio communication systems (for example, 5G, NR, etc.) presume use cases characterized by, for example, high speed and large capacity (for example, eMBB), a very large number of terminals (for example, massive MTC (Machine Type Communication)), ultra-high reliability and low latency (for example, ultra reliable and low-latency communications), and so on. Assuming these use cases, for example, studies are in progress to communicate using beam forming (BF) in future radio communication systems.

The beam forming (BF) includes a digital BF and an analog beam BF. Digital BF refers to a method of performing precoding signal processing on the baseband (for digital signals). In this case, inverse fast Fourier transform (IFFT)/digital-to-analog conversion (DAC)/RF (Radio Frequency) need to be carried out in parallel processes, as many as the number of antenna ports (RF Chains). Meanwhile, it is possible to form a number of beams according to the number of RF chains at an arbitrary timing.

Analog BF refers to a method of using phase shifting devices on RF. In this case, since it is only necessary to rotate the phase of RF signals, analog BF can be realized with simple and inexpensive configurations, but it is nevertheless not possible to form a plurality of beams at the same time. To be more specific, when analog BF is used, each phase shifting device can only form one beam at a time.

Thus, if a radio base station (referred to as, for example, "gNB (gNodeB)," "transmission and reception point (TRP)," "eNB (eNode B)," "base station (BS)," and so on) has only one phase shifter, the radio base station can only form one beam at any given time. Therefore, when multiple beams are transmitted using analog BF alone, these beams cannot be transmitted simultaneously using the same resources, and the beams need to be switched, rotated and so on, over time.

Note that it is also possible to adopt a hybrid BF configuration which combines digital BF and analog BF. Although, for future radio communication systems (for example, 5G, NR, etc.), a study is under way to introduce MIMO (for example, massive MIMO), which uses a large number of antenna elements, attempting to form an enormous number of beams using digital BF alone might lead to expensive circuit structures. For this reason, there is a possibility that hybrid BF will be used in future radio communication systems.

In the event beam forming (including digital BF, analog BF, hybrid BF, etc.) such as described above is employed (for example, when it is likely that a narrower beam is used in a high frequency band), it is desirable to ensure the robustness of beams addressed to user terminals and/or to appropriately recover beams addressed to user terminals.

As for the method for ensuring the robustness of beams, for example, it may be possible to transmit the same DL channel (which may be a DL control channel (also referred to as, for example, "NR-PDCCH (Physical Downlink Shared Channel)" and/or a DL data channel (also referred to as, for example, "NR-PDSCH (Physical Downlink Shared Channel)")) by using a plurality of beams. This is done so because, assuming that a radio base station may not be able to obtain information about the best beam (also referred to as "transmitting beam," "Tx beam,," and so on) for a user terminal (for example, a beam index (BI)), if a DL channel is transmitted using a plurality of beams, there is a high possibility that the user terminal is located in the direction where at least one of these multiple beams is turned to.

Furthermore, assuming that a DL channel is transmitted using a plurality of beams, if these multiple beams are to be controlled in a closed loop manner, it is necessary to feed back information related to multiple beams (for example, a plurality of beam indices) regardless of what rank the DL channel is for a user terminal (the number of layers). For example, a radio base station may determine the rank of the DL channel based on multiple beam indices and channel quality indicators (CQIs). In this case, the rank indicator (RI) needs not be fed back from the user terminal.

Note that the requirement (need) for beam robustness varies between DL control channels and DL data channels. Retransmission control (for example, HARQ) is applied to DL data channels, so that, even when a beam that communicates DL data ceases, the DL data can be retransmitted based on delivery acknowledgment information (also referred to as "HARQ-ACK (Hybrid Automatic Repeat reQuest-ACKnowledgement)," "ACK/NACK (ACKnowledgement/Negative ACK)," "A/N,," and so on) from a user terminal. On the other hand, since retransmission control is not applied to DL control channels, the beams for DL control channels require higher robustness than the beams for DL data channels.

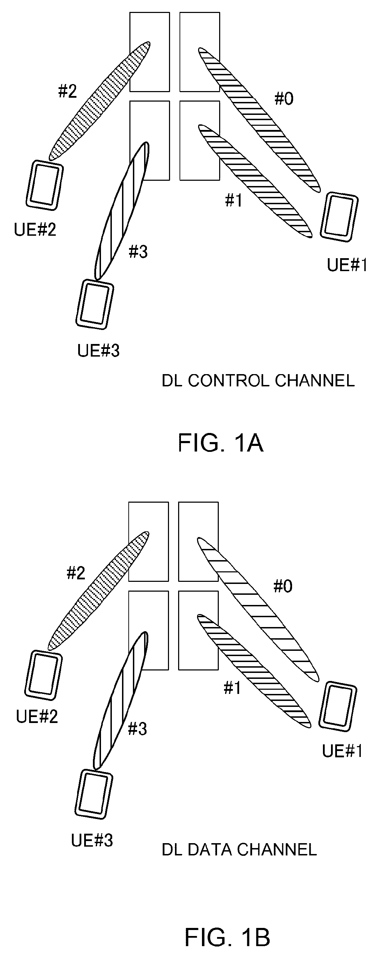

FIGs. 1 provide diagrams that each show an example of beam forming. FIG. 1A shows a case where beam forming is applied to DL control channels. For example, referring to FIG. 1A, DCI for user terminal (UE: User Equipment) #1 is transmitted using beams #0 and #1, DCI for user terminal #2 is transmitted using beam #2, and DCI for user terminal #3 is transmitted using beam #3. Since DL control channels require high robustness, the same DCI may be transmitted to user terminal #1 of FIG. 1A using a DL control channel of multiple beams #0 and #1.

FIG. 1B shows a case where beam forming is applied to DL data channels. For example, referring to FIG. 1B, varying pieces of DL data for user terminal #1 are transmitted using beams #0 and #1, and DL data for user terminal #2 is transmitted using beam #2, and DL data for user terminal #3 is transmitted using beam #3. Since DL data channels are required to be as highly robust as DL control channels, varying pieces of DL data may be transmitted to user terminal #1 of FIG. 1B using a DL data channel of beams #0 and #1.

Note that, in FIG. 1A, the beams for monitoring the DL control channel may be preconfigured, for each of user terminals #1 to #3, by higher layer signaling. Also, in FIG. 1B, the beams for transmitting the DL data channel may be designated, for each of user terminals #1 to #3, by DCI that schedules the DL data channel.

In this way, DL control channel beams require higher robustness than DL data channel beams. Therefore, the present inventors have come up with the idea of providing a plurality of candidates for allocating a DL control channel (hereinafter also referred to as "DL control channel candidates") in a search space, in one or more beams, and enabling a user terminal to monitor these DL control channel candidates in one or more beams, thereby ensuring the robustness of the DL control channel (first aspect).

Also, the present inventors have come up with the idea that, when a user terminal monitors DL control channel candidates in one or more beams and detects DCI, information about the beam and/or the DL control channel candidate where the DCI is detected may be fed back to the radio base station, thereby making it possible to recover DL control channel and/or DL data channel beams (second aspect).

Now, embodiments of the present invention will be described below in detail with reference to the accompanying drawings. Note that the beam forming in the present embodiment may be any of digital BF, analog BF and hybrid BF.

Also, a "beam" as used in the present embodiment may be paraphrased as a "DMRS port," a "reference signal antenna port," an "antenna port" and so on. A DMRS port is an antenna port of a reference signal (also referred to as "demodulation reference signal," "DMRS," and so on) that is used to demodulate a DL channel (a DL data channel and/or a DL control channel), and may be associated with a unique beam. Note that the DMRS sequence may vary between different DMRS ports, and/or at least one of the frequency resources, the time resources and the code resources (for example, OCC: Orthogonal Cover Code) where the DMRS is arranged, and/or the cyclic shift (CS), may vary. Also, "beams" may be identified by varying directivities (precoding matrix) applied to the same DMRS.

Also, with the present embodiment, a beam from a radio base station may be controlled (that is, precoding control in the radio base station) based on feedback information (for example, at least one of a beam index, a precoding matrix indicator (PMI) and a rank indicator (RI)) from a user terminal (closed loop control), or may be controlled without relying on this feedback information (open loop control).

In the present embodiment, a user terminal monitors (blind-decodes) a plurality of DL control channel candidates in a search space and detects DCI addressed to the user terminal. This DCI may include scheduling information for a DL data channel (for example, an NR-PDSCH) or an uplink (UL) data channel (for example, an NR-PUSCH). The user terminal may receive the DL data channel or transmit the UL data channel based on the scheduling information.

Here, a DL control channel candidate is a candidate for allocating a DL control channel, and may be referred to as a "search space candidate," a "CCH candidate," a "PDCCH candidate," an "NR-PDCCH candidate" and so on. One DL control channel candidate may be formed in a single resource unit, or may be formed by aggregating a plurality of resource units. The number of resource units that form one DL control channel candidate may be referred to as an "aggregation level," and so on. For example, at least one of 1, 2, 4, 8, 16 and other values may be used as aggregation levels.

(First Aspect)

With the first aspect of the present invention, the search space in a DL control channel when the DL control channel is formed with a plurality of beams will be described. According to the first aspect, a user terminal monitors a plurality of DL control channel candidates provided in different beams. Also, the user terminal may select one or more resource units that constitute these multiple DL control channel candidates by using at least one of the following first to third search space configurations.

Here, the resource units to form a DL control channel candidate is, for example, the minimum unit for DL control channels, and may be referred to as a "physical resource block (PRB)," a "resource block (RB)," a "resource unit," a "control channel element (CCE)," an "NR- CCE," a "control subband," a "PRB set," a "control resource set" and so on. Hereinafter, this resource unit will be referred to as a "CCE."

In the first aspect, one or more beams (also referred to as "DMRS ports" and so on) where multiple DL control channel candidates are provided in the search space may be specified by higher layer signaling and/or physical layer signaling (for example, DCI). These (one or more) beams may be indicated by beam indices and/or DMRS port numbers.

In the first aspect, when digital BF is applied, the user terminal performs channel estimation for one or more beams (also referred to as "DMRS ports" and so on) in the same time resource and frequency resource, and detects the DCI located in one of the multiple DL control channel candidates in these (one or more) beams. Meanwhile, when analog BF is used, the user terminal may perform channel estimation for one or more beams in different time resources in the same frequency resource. That is, the multiple beams shown in the following drawings may be transmitted at the same time or may be transmitted at different times.

<First Search Space Configuration>

When using the first search space configuration, the user terminal may select the CCEs that constitute each DL control channel candidate in the search space based on information related to beams (beam information). Here, the beam information may be, for example, at least one of a beam index (BI), the DMRS port number that is associated with this beam, and so on.

To be more specific, the user terminal may select the CCEs that constitute each DL control channel candidate based on at least one of the beam information, the total number of CCEs that constitute the DL control channel, the number of DL control channel candidates per beam, the number of CCEs per DL control channel candidate (aggregation level), and the number of beams in which DL control channel candidates are placed. Also, the user terminal may select the CCEs that constitute each DL control channel candidate based on a hash function which uses at least one of these as a key.

For example, the user terminal may select the CCEs to constitute a DL control channel candidate m based on the hash function shown in equation 1:

$$L\left\{\left(Y_{k,beam} + \left\lceil \frac{mN_{CCE,k}}{L \cdot M_{beam}^{(L)}} \right\rceil + b\right) \bmod \left\lfloor N_{CCE,k}/L \right\rfloor \right\} + i \qquad \ldots (\text{Equation } 1)$$

In equation 1, $N_{CCE,k}$ is the total number of CCEs that constitute the DL control channel in slot k. When the DL control channel includes one or more resource sets, $N_{CCE}$ may be the total number of CCEs per resource set. L is the aggregation level of CCEs, and, for example $L \in \{1, 2, 4, 8, 16, 32\}$. Also, b is a parameter related to cross-carrier scheduling, and, when a carrier indicator field is provided in DCI, b is the value of the carrier indicator field.

In equation 1, $M_{beam}^{(L)}$ is the number of DL control channel candidates monitored at an aggregation level L in a given beam. The value of $M_{beam}^{(L)}$ may be different per beam. m=0, ..., $M_{beam}^{(L)}$-1. i=0, ..., L-1. Also, $Y_{k,beam}$ is a parameter based on the beam information. Note that equation 1 is merely an example, and the CCEs that constitute DL control channel candidate m may be determined based on at least one of the parameters shown in equation 1.

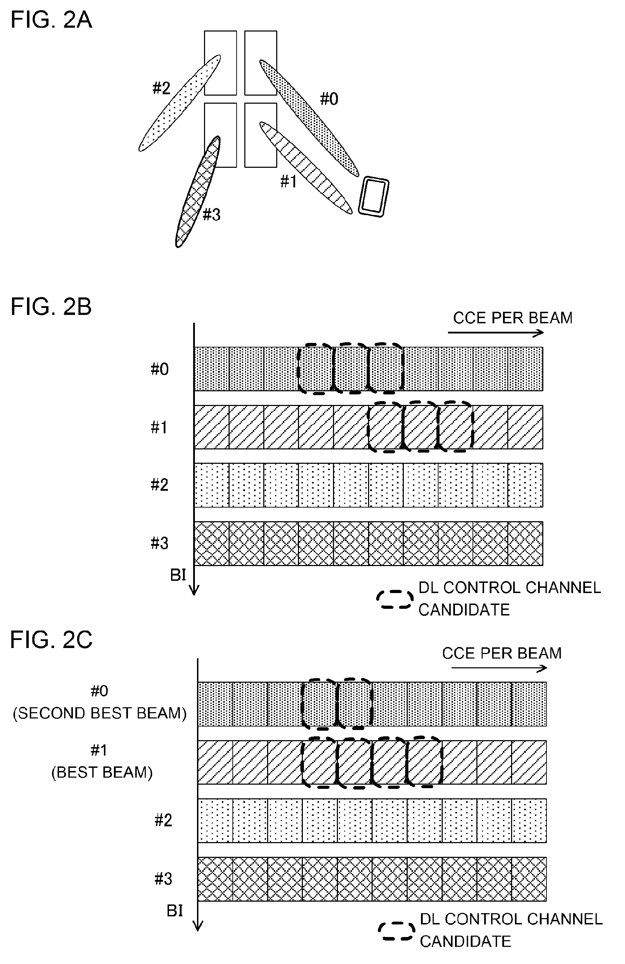

FIGs. 2 provide diagrams that each show an example of a first search space configuration according to the first aspect. In FIG. 2A, examples of multiple beams forming a DL control channel are shown. As shown in FIG. 2A, when a DL control channel is constituted by a plurality of beams (here, beams #0 to #3), multiple DL control channel candidates, which are to be monitored by the user terminal, may be provided in at least one of these multiple beams.

FIGs. 2B and 2C show examples of DL control channel candidates at aggregation level L=1. In FIGs. 2B and 2C, since the aggregation level is L=1, each DL control channel candidate is constituted by one CCE, but L=1 is not limiting. Also, in FIGs. 2B and 2C, the total number of DL control channel candidates at L=1 is six, but the total number may be larger than six or may be smaller than six.

For example, in FIGs. 2B and 2C, a plurality of DL control channel candidates that are to be monitored by the user terminal are provided in beams #0 and #1, which are directed to the user terminal, among beams #0 to #3 forming the DL control channel in FIG. 2A. The beam information indicating beams #0 and #1 may be reported to the user terminal through physical layer signaling and/or higher layer signaling.

As shown in FIG. 2B, the number of DL control channel candidates at aggregation level L may be equal among multiple beams. For example, in FIG. 2B, three DL control channel candidates with L=1 are provided in each of beams #0 and #1. In this case, $M_{beam}^{(L)}$ in equation 1 is 3 when L=1, in both beams #0 and #1.

Also, as shown in FIG. 2B, the position (starting index) where the CCEs that constitute a DL control channel candidate at aggregation level L start may be different per beam. For example, in FIG. 2B, the position where the CCE constituting the three DL control channel candidates of beam #0 start and the position where the CCEs that constitute the three DL control channel candidates of beam #1 start are different. In this manner, the rate of collisions with other DL control channel candidates of other user terminals can be reduced by changing, for each beam, the starting position of the CCEs that constitute DL control channel candidates.

Alternatively, as shown in FIG. 2C, the number of DL control channel candidates at aggregation level L may be different between multiple beams. To be more specific, the number of DL control channel candidates ($M_{beam}^{(L)}$ in equation 1 above) may be configured greater is a beam is more suitable for the user terminal (for example, if a beam shows higher received power). For example, in FIG. 2C, beam #1 is the best beam for the user terminal, so that, when L=1, the number of DL control channel candidates of beam #1 is four while the number of DL control channel candidates of beam #0 is two.

In addition, as shown in FIG. 2C, the starting position (starting index) of the CCEs constituting the DL control channel candidates at aggregation level L may be the same between the beams. For example, in FIG. 2C, the starting position of the CCEs that constitute the two DL control channel candidates of beam #0 and the starting position of the CCEs that constitute the four DL control channel candidates of beam #1 are the same.

According to the first search space configuration, multiple DL control channel candidates to be monitored by the user terminal are provided in at least one of multiple beams, so that it is possible to ensure the robustness of the DL control channel.

<Second Search Space Configuration>

In the second search space configuration, the number of DL control channel candidates may be determined for each beam such that the total number of DL control channel candidates to be monitored by the user terminal does not increase compared to existing LTE systems (for example, LTE Rel. 13 or earlier versions). To be more specific, the number of DL control channel candidates at each aggregation level may be determined on a per beam basis so that the total number of DL control channel candidates to be monitored by the user terminal at each aggregation level does not increase.

In existing LTE systems in which beam forming (BF) is not applied to DL control channels, in a user terminal-specific search space, the total number of DL control channel candidates at aggregation levels L=1, 2, 4 and 8 may be 6, 6, 2 and 2, respectively. Also, in the user terminal-common search space, the total number of DL control channel candidates at aggregation levels L=4 and 8 may be 4 and 2, respectively. The total number of DL control channel candidates when BF is not applied is not limited to the above.

Therefore, when the second search space configuration is applied, the number of DL control channel candidates per beam may be determined based on the total number of DL control channel candidates when BF is not applied and the total number of beams to be monitored by the user terminal (the number of beams).

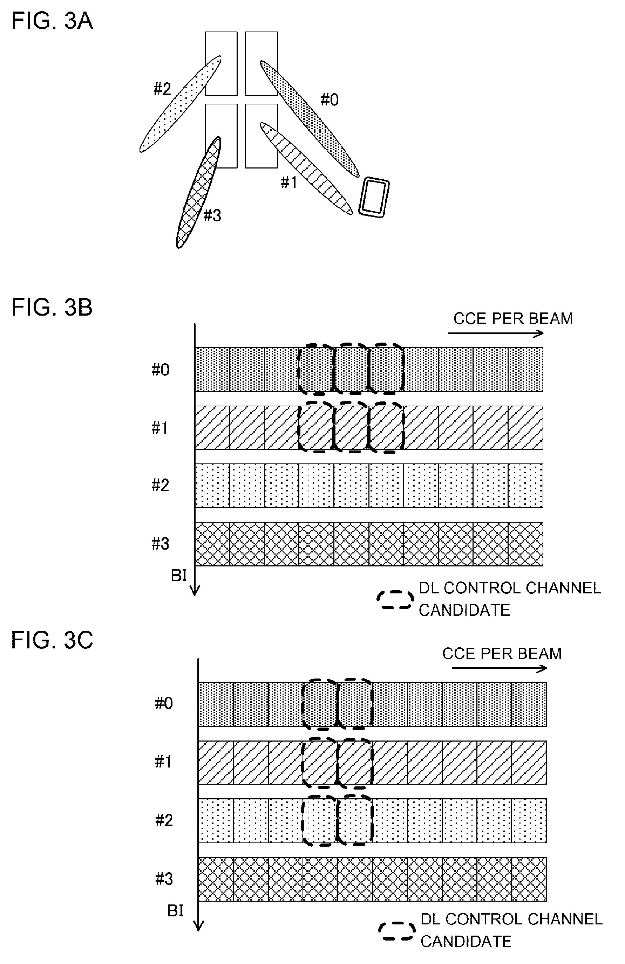

FIGs. 3 provide diagrams, each showing an example of the second search space configuration according to the first aspect. Here, as shown in FIG. 3A, a DL control channel is constituted by a plurality of beams #0 to #3, where the user terminal monitors beams #0 and #1 in FIG. 3B, and the user terminal monitors beams #0, #1 and #2 in FIG. 3C. That is, the number of beams to be monitored by the user terminal is "two" in FIG. 3B and "three" in FIG. 3C.

In FIGs. 3B and 3C, the aggregation level is L=1, and the total number of DL control channel candidates when BF is not applied is, for example, "six." In this case, as shown in FIG. 3B, if the number of beams to be monitored by the user terminal is "two," the number of DL control channel candidates per beam may be "three." Furthermore, as shown in FIG. 3C, if the number of beams to be monitored by the user terminal is "three," the number of DL control channel candidates per beam may be "two."

For example, the user terminal may select the CCEs to constitute DL control channel candidate m shown in FIGs. 3B and 3C based on the hash function shown in equation 2.

$$
L \left\{ \left( Y_k + \left\lfloor \frac{m N_{CCE,k}}{L \cdot M_{beam}^{(L)}} \right\rfloor + b \right) \bmod \left\lfloor N_{CCE,k}/L \right\rfloor \right\} + i \qquad \ldots \text{(Equation 2)}
$$

In equation 2, $M_{beam}^{(L)}$ is the number of DL control channel candidates at aggregation level L in a given beam. As described above, $M_{beam}^{(L)}$ may be determined based on the total number of DL control channel candidates when BF is not applied and the number of beams to be monitored by the user terminal. $M_{beam}^{(L)}$ may be reported to the user terminal via higher layer signaling and/or physical layer signaling. For example, in FIG. 3B, $M_{beam}^{(L)}$=3 in both beams #0 and #1, and, in FIG. 3C, $M_{beam}^{(L)}$=2 in each of beams #0, #1 and #2.

Also, in equation 2, instead of the beam information-based parameter $Y_{k,beam}$ in equation 1, a predetermined parameter Yk, which is independent of beam information, may be used. In the case of using the predetermined parameter "$Y_k$," as shown in FIGs. 3B and 3C, the starting position (starting index) of the CCEs that constitute DL control channel candidates may match between beams. Note that the other parameters are the same as in equation 1. In the second search space configuration, it is also possible to use the beam information-based parameter $Y_{k,beam}$ as in equation 1.

According to the second search space configuration, even when a plurality of DL control channel candidates to be monitored by the user terminal are provided in at least one of multiple beams, it is possible to prevent an increase in the number of times blind decoding is performed in the user terminal.

<Third Search Space Configuration>

Based on a third search space configuration, the structure of DL control channel candidates constituted by multiple CCEs will be described. The third search space configuration can be used in combination with the first and/or the second search space configuration.

Where each DL control channel candidate is constituted by multiple CCEs (that is, when aggregation level L is 2 or more), each DL control channel candidate may be constituted by multiple CCEs of a single beam, or by multiple CCEs of different beams.

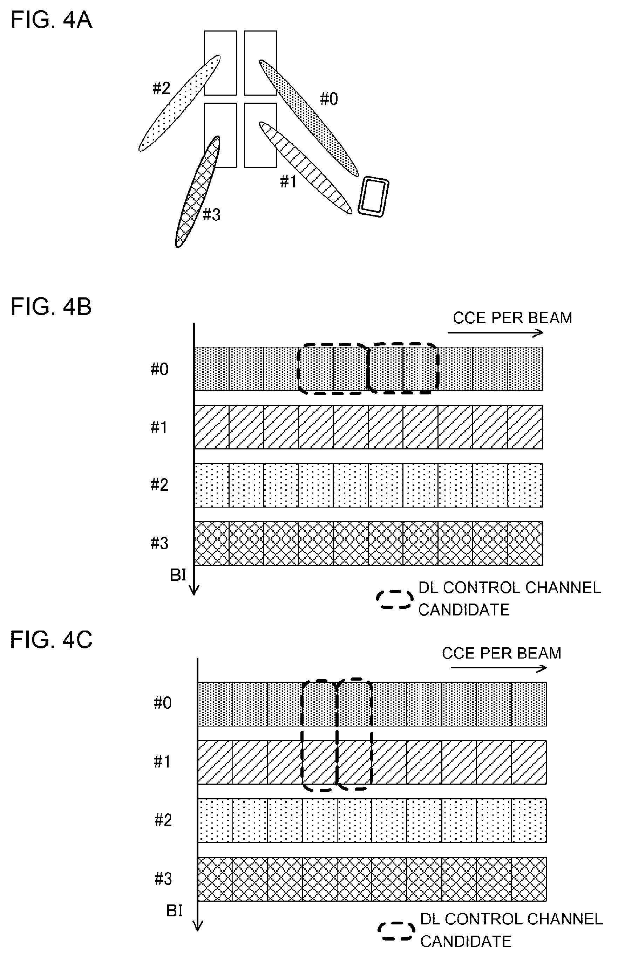

FIG. 4 is a diagram to show an example of the third search space configuration according to the first aspect. Here, as shown in FIG. 4A, the DL control channel is constituted by a plurality of beams #0 to #3.

As shown in FIG. 4B, each DL control channel candidate may be constituted by multiple CCEs of the same beam. For example, in FIG. 4B, at aggregation level L=2, the two DL control channel candidates are each constituted by two CCEs of beam #0. In the case shown in FIG. 4B, each DL control channel candidate is constituted by a plurality of CCEs belonging to the best beam for the user terminal (here, beam #0), so that a beam selection gain can be achieved.

Alternatively, as shown in FIG. 4C, each DL control channel candidate may be constituted by multiple CCEs of different beams. For example, in FIG. 4C, when the aggregation level is L=2, the two DL control channel candidates are constituted by one CCE of beam #0 and one CCE of beam #1, respectively. In the case shown in FIG. 4C, it is possible to achieve a beam diversity gain by constituting DL control channel candidates by using a plurality of CCEs belonging to different beams.

In FIG. 4B, DL control channel candidates are provided only in beam #0, but DL control channel candidates may be provided, which are constituted by two CCEs of beam #1. Furthermore, while, in FIG. 4C, each DL control channel candidate is constituted by a plurality of CCEs having the same index (CCE index) and belonging to different beams, each DL control channel candidate may be constituted by multiple CCEs having different indices and belonging to different beams.

Also, multiple DL control channel candidates in the search space may include a DL control channel candidate that is constituted by a plurality of CCEs of the same beam, and a DL control channel candidate that is constituted by a plurality of CCEs of different beams. For example, the DL control channel candidates at aggregation level L=2 may include the two DL control channel candidates shown in FIG. 4A and the two DL control channel candidates shown in FIG. 4B.

<Variation>

The above first to third search space configurations may be used alone, or at least two of them may be used in combination.

According to the first aspect, when the user terminal performs blind decoding once, the user terminal may blind-decode (monitor) a search space corresponding to a single beam (DMRS port) and a search space corresponding to a plurality of beams.

Furthermore, one or more resource sets may be provided in the DL control channel according to the first aspect. Each resource set may be configured to include a plurality of CCEs, and resource set-specific index number may be assigned to these multiple CCEs.

When multiple resource sets are configured in the DL control channel, search spaces of different configurations may be used for each resource set. For example, a DL control channel of a given resource set may be applied beam splitting (constituted by multiple beams), and a DL control channel of another resource set may not be applied beam splitting. In addition, the user terminal may monitor (blind-decode) a DL control channel candidate in a single beam (DMRS port) in a given resource set, and monitor a DL control channel candidate in a plurality of beams in another resource set.

Also, in the first to third search space configurations, an index number (CCE index) is assigned to each CCE, for each beam, but this is not limiting. Serial CCE indices may be assigned to a plurality of beams forming a DL control channel. To be more specific, the index numbers of CCEs may be assigned based on at least one of the total number of CCEs that constitute a DL control channel and the number of beams forming the DL control channel.

In this case, the user terminal may select the CCEs for constituting DL control channel candidate m based on the hash function shown in equation 3:

$$ L\left\{\left(Y_k + \left\lfloor \frac{mN_{CCE,k}}{L \cdot M^{(L)}} \right\rfloor + b\right) \bmod \lfloor N_{CCE,k}/L \rfloor\right\} + i \qquad \ldots \text{(Equation 3)} $$

In equation 3, $M^{(L)}$ is the number of DL control channel candidates at aggregation level L, which is not defined on a per beam basis, as in equations 1 and 2 above. The beams that constitute DL control channel candidate m determined by equation 3 may be determined by using equation 4:

$$ \left\lfloor \frac{SS_m X_{beam}}{N_{CCE,k}} \right\rfloor \qquad \ldots \text{(Equation 4)} $$

$SS_m$ in Equation 4 is the smallest index among the CCEs which constitute DL control channel candidate m determined by equation 3 above. $X_{beam}$ is the number of beams allocated to the DL control channel. $N_{CCE,k}$ is as described in relation to equation 1.

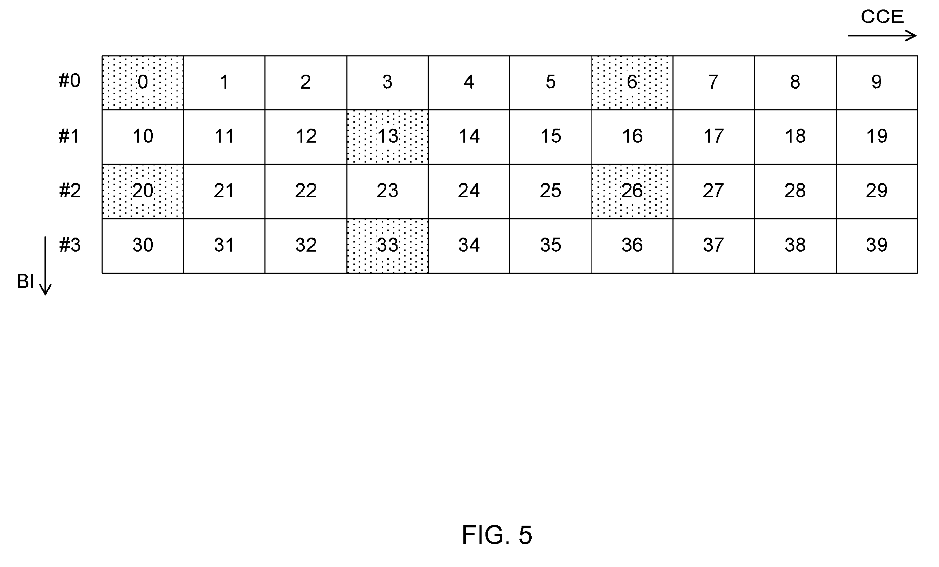

FIG. 5 is a diagram to show an example of a search space configuration according to an alternative example of the first aspect. FIG. 5 shows the CCEs that constitute DL control channel candidate m as determined based on equation 3, and the beams of the CCEs. In FIG. 5, $Y_k$=0, $N_{CCE,k}$=40, $M^{(L)}$=6, L=1 and i=0, in equation 3. In this case, the CCEs (search space $SS_m$) that constitute the DL control channel candidates m=0, 1, 2, 3, 4 and 5 are the CCEs of index numbers #0, #6, #13, #20, #26 and #33, respectively.

In this case, referring to equation 4, as shown in FIG. 5, CCEs #0 and #6, which constitute DL control channel candidates 0 and 1, are formed with beam #0. Also, CCE #13, which constitutes DL control channel candidate 2, is formed with beam #1. Also, CCE #20 and #26, which constitute DL control channel candidates 3 and 4, are formed with beam #2. Also, CCE #33, which constitutes DL control channel candidate 5, is formed with beam #3.

As described above, when the index numbers of CCEs are assigned based on at least one of the total number of CCEs that constitute a DL control channel and the number of beams forming the DL control channel, a plurality of DL control channel candidates can be formed with different beams, without taking into consideration the beams in a hash function.

According to the first aspect, a plurality of DL control channel candidates are provided in a search space in one or more beams, and a user terminal can monitor these multiple DL control channel candidates, so that the robustness of the DL control channel can be ensured.

(Second Aspect)

Based on a second aspect of the present invention, beam recovery will be described. For beam recovery, network-initiated beam recovery (NW-initiated beam recovery) and user terminal-initiated beam recovery (UE-initiated beam recovery) are possible.

In network-initiated beam recovery, if no response to a DL signal (for example, a DL control channel) arrives from the user terminal within the predetermined period, the network (for example, a radio base station) may detect that the beam is off target (beam recovery is required).

In user terminal-initiated beam recovery, when a predetermined condition is fulfilled (for example, when the measured value of a DL signal deteriorates below a predetermined threshold), a report may be sent to the network to the effect that beam recovery is necessary, based on at least one of a random access channel (for example, PRACH: Physical Random Access Channel), a sounding reference signal (SRS), a scheduling request (SR) and a new signal and/or resource.

In the following, network-initiated beam recovery will be explained. In network-initiated beam recovery, a user terminal receives a DL control channel and/or a DL data channel transmitted using one or more beams. Note that the DL control channel and the DL data channel may be transmitted using the same beam (beams having the same directivity).

<First Example of Beam Recovery>

In a first example of beam recovery, as has been explained with reference to the first aspect, the search space in a DL control channel may be comprised of multiple DL control channel candidates of different beams. The user terminal monitors these multiple DL control channel candidates and feeds back information about a DL control channel candidate that is detected (detection information), to the radio base station.

Here, the detection information relating to the DL control channel candidate is, for example, beam information pertaining to the DL control channel candidate detected in the user terminal (see the first aspect), resource information forming the detected DL control channel candidate (for example, CCE index numbers), the identification number of the detected DL control channel candidate, and the like. For example, the user terminal may transmit the detection information to the radio base station using an aperiodic channel state information (CSI) report or a semi-persistent CSI report.

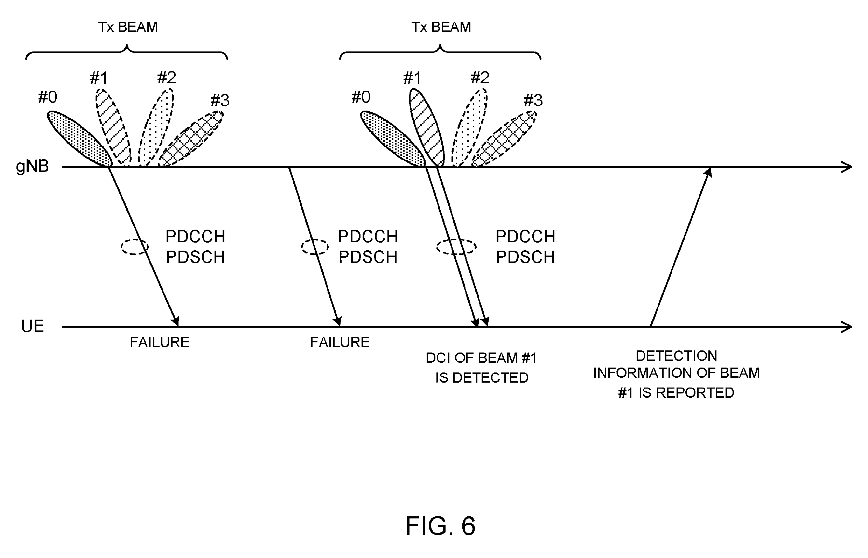

FIG. 6 is a diagram showing the first example of beam recovery according to the second aspect of the present invention. In FIG. 6, a DL control channel (for example, PDCCH) can be transmitted in a plurality of beams (also referred to as "transmitting beams," "Tx beams," and so on) #0 to #3. In FIG. 6, the user terminal (UE) monitors a plurality of DL control channel candidates provided in beams #0 to #3, and detects a DCI that is addressed to this user terminal. Also, the user terminal may receive a DL data channel based on this DCI. In FIG. 6, a DL data channel (for example, PDSCH) and a DL control channel are transmitted in the same beam, but the DL data channel may not be transmitted.

For example, in FIG. 6, the radio base station (gNB) transmits DCI to the user terminal using the DL control channel of beam #0. In FIG. 6, although the user terminal monitors a plurality of DL control channel candidates of beams #0 to #3, the user terminal fails to detect the DCI in the DL control channel candidate of beam #0.

When feedback from the user terminal does not arrive within a predetermined period after beam #0 is transmitted, the radio base station transmits DCI addressing the user terminal by using a DL control channel of multiple beams #0 and #1. That DCI may include information (trigger information) for requesting a report of the above detection information. Note that the payload (for example, scheduling information of the DL data channel or the UL data channel, and so on) may not be included in this DCI.

In FIG. 6, the user terminal detects DCI addressed to this user terminal in the DL control channel candidate of beam #1. Based on the trigger information in that DCI, the user terminal may report the detection information related to the DL control channel candidate of beam #1 to the radio base station. This detection information may be, for example, at least one of the beam index of beam #1, the DMRS port associated with beam #1, identification information of the DL control channel candidate, and information about the resources (for example, CCE index numbers) forming the DL control channel candidate.

Also, this detection information may be reported explicitly to the radio base station using a UL control channel (for example, PUCCH) and/or a UL data channel (for example, PUSCH). Alternatively, this detection information may be associated with a resource for a UL control channel (for example, PUCCH resource) and reported to the radio base station implicitly.

Note that, in FIG. 6, feedback from the user terminal does not arrive within a predetermined period from the transmission using beam #0, the radio base station transmits DCI using the DL control channel of multiple beams #0 and #1, the radio base station may transmit that DCI using a DL control channel of one or more beams (for example, at least one of beams #1 to #3) different from beam #0.

Furthermore, in FIG. 6, when feedback from the user terminal does not arrive within a predetermined period after transmission using beam #0, a DL control channel and a DL data channel are transmitted using multiple beams #0 and #1, the DL data channel may not be transmitted.

According to the first example of beam recovery, if feedback from the user terminal does not arrive within a predetermined period from transmission in a specific beam, the radio base station can detect that this specific beam has lost sight of the user terminal. In this case, the radio base station can transmit DCI in multiple beams (or a beam other than the specific beam), and recover the beam addressed to a user terminal based on the detection information of DCI from the user terminal.

<Second Example of Beam Recovery>

In a second example of beam recovery, the search space in a DL control channel includes a first search space (for example, a user terminal-specific search space) and a second search space (also referred to as, for example, a "user terminal-common search space," a "fallback search space," and so on). The multiple DL control channel candidates in the second search space are provided in different beams from the multiple DL control channel candidates in the first search space. Here, "different beams" may be, for example, beams in which at least one of the DMRS port, the precoding matrix, the directivity and the beam width is different.

If feedback from the user terminal does not arrive within a predetermined period after DCI is transmitted using the DL control channel candidates in the first search space, the radio base station transmits DCI using the candidate DL control channels in the second search space. The user terminal monitors the multiple DL control channel candidates in the second search space and feeds back the above detection information to the radio base station.

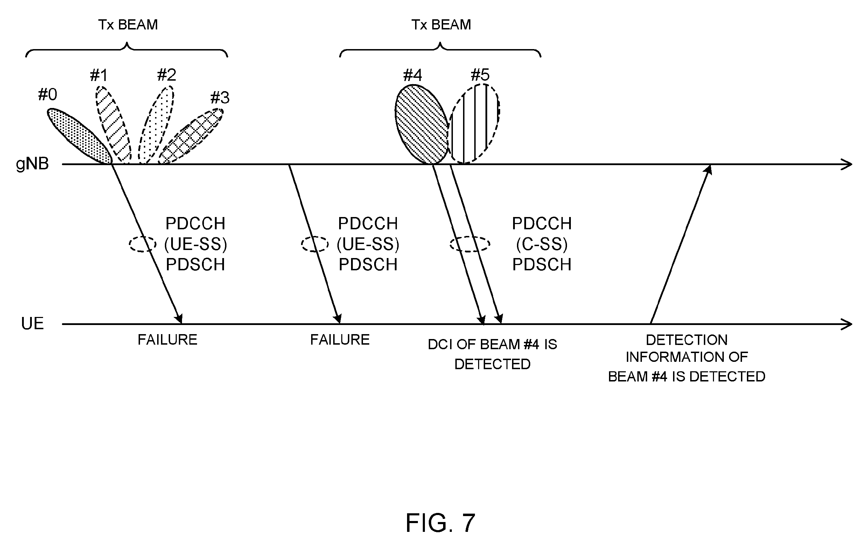

FIG. 7 is a diagram to show a second example of beam recovery according to the second aspect. In FIG. 7, a DL control channel (for example, PDCCH) can be transmitted in beams #0 to #3, which constitute a first search space, and beams #4 and #5, which constitute a second search space. Note that, in FIG. 7, a DL data channel (for example, PDSCH) and a DL control channel are transmitted in the same beam, but the DL data channel may not be transmitted.

For example, in FIG. 7, the radio base station (gNB) transmits DCI addressing the user terminal using the DL control channel of beam #0 which constitutes the first search space. In FIG. 7, although the user terminal monitors a plurality of DL control channel candidates of beams #0 to #3 in the first search space, the user terminal fails to detect the DCI in the DL control channel candidate of beam #0.

When feedback from the user terminal does not arrive within a predetermined period after transmission using beam #0, the radio base station transmits DCI to the user terminal using the DL control channel of beam #4 which constitutes the second search space.

Here, the DCI transmitted in the second search space may be the same as or different from the DCI transmitted in the first search space. For example, the DCI transmitted in the second search space may include information (trigger information) requesting a report of the above detection information. Also, the payload (for example, scheduling information of the DL data channel or the UL data channel) may not be included in this DCI. Also, the DCI transmitted in the second search space may be masked (scrambled) using different information (for example, RNTI: Radio Network Temporary ID) from the DCI transmitted in the first search space.

In FIG. 7, the user terminal detects the DCI addressed to this user terminal in the DL control channel candidate of beam #4 that constitutes the second search space. Based on the trigger information in that DCI, the user terminal may report the detection information related to the DL control channel candidate of beam #4 to the radio base station. This detection information may be, for example, at least one of the beam index of beam #4, the DMRS port associated with beam #4, the identification information of the DL control channel candidate, and the resource information (for example, CCE index numbers) forming that DL control channel candidate.

Also, this detection information may be reported to the radio base station explicitly using a UL control channel (for example, PUCCH) and/or a UL data channel (for example, PUSCH). Alternatively, this detection information may be associated with a resource (for example, a PUCCH resource) for a UL control channel and reported to the radio base station implicitly.

According to a second example of beam recovery, if feedback from the user terminal does not arrive within a predetermined period after transmission of the beam that constitutes the first search space, the radio base station can detect that that specific beam has lost sight of the user terminal. In this case, the radio base station can transmit DCI in the beam constituting the second search space, and recover the beam addressed to a user terminal based on the detection information of DCI from the user terminal.

(Radio Communication System)

Now, the structure of a radio communication system according to the present embodiment will be described below. In this radio communication system, communication is performed using one or a combination of the radio communication methods according to the herein-contained embodiments of the present invention.

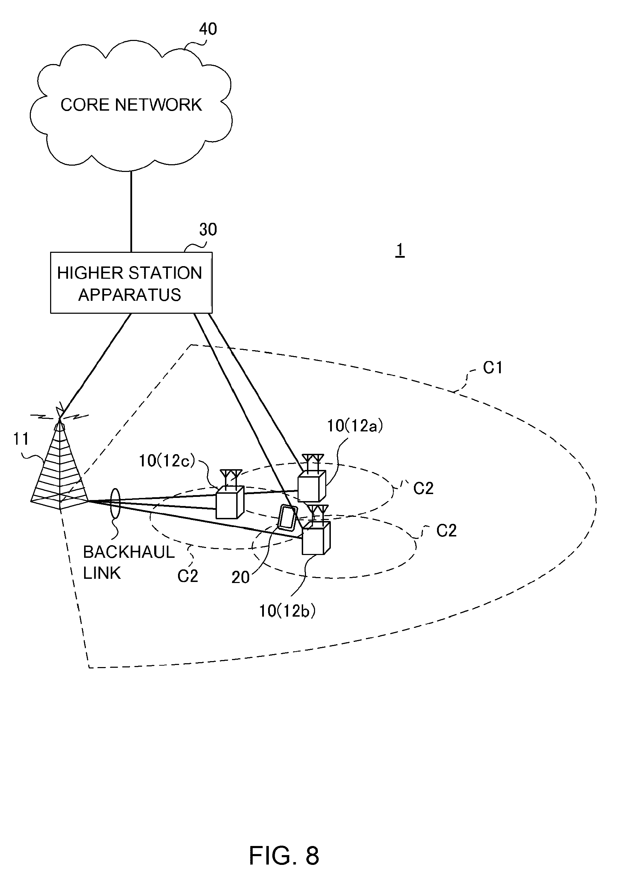

FIG. 8 is a diagram to show an example of a schematic structure of a radio communication system according to the present embodiment mode. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

In the radio communication system 1, a radio base station using a plurality of types of beam forming communicates with a user terminal, where the user terminal transmits a random access preamble (PRACH), including beam information about the beams of the radio base station, and the radio base station receives the PRACH containing the beam information.

The radio communication system 1 includes a radio base station 11 that forms a macro cell C1 having a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3 to 40 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and radio base station 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information, SIBs (System Information Blocks) and so on are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," and so on) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement information and so on are communicated by the PUCCH. By means of the PRACH, random access preambles for establishing connections with cells are communicated.

In the radio communication systems 1, the cell-specific reference signal (CRS: Cell-specific Reference Signal), the channel state information reference signal (CSI-RS: Channel State Information-Reference Signal), the demodulation reference signal (DMRS: DeModulation Reference Signal), the positioning reference signal (PRS: Positioning Reference Signal) and so on are communicated as downlink reference signals. Also, in the radio communication system 1, the measurement reference signal (SRS: Sounding Reference Signal), the demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

(Radio Base Station)

The radio base station uses multiple types of beam forming, and transmits a DL signal to a user terminal, and receives a random access preamble (PRACH) including beam information related to the beams of the radio base station detected based on the DL signal.

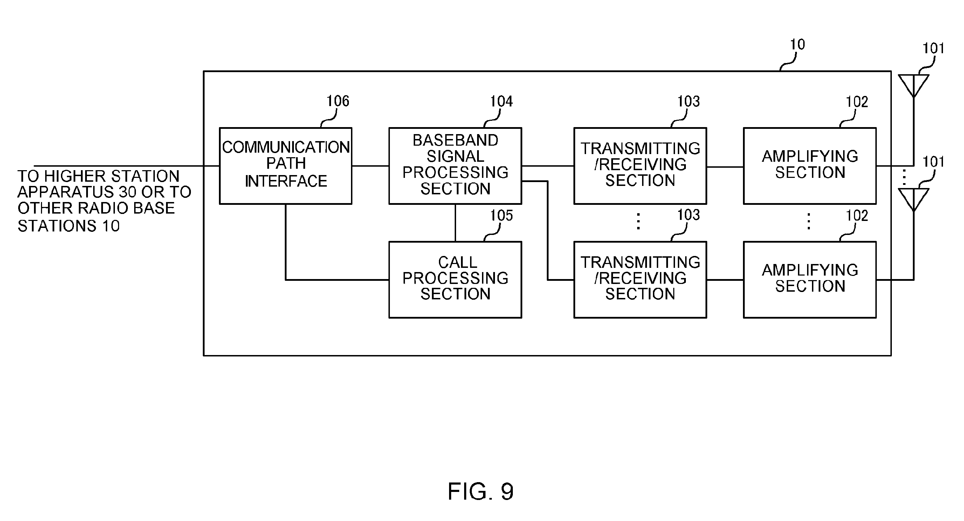

FIG. 9 is a diagram to show an example of an overall structure of a radio base station according to the present embodiment mode. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beam forming section that forms analog beams. The analog beam forming section may be constituted by an analog beam forming circuit (for example, a phase shifter, a phase shifting circuit, etc.) or analog beam forming apparatus (for example, a phase shifting device) that can be described based on general understanding of the technical field to which the present invention pertains. Furthermore, the transmitting/receiving antennas 101 may be constituted by, for example, array antennas. In addition, the transmitting/receiving sections 103 are structured so that single-BF or multiple-BF operations can be used.

The transmitting/receiving sections103 may transmit a reference signal (for example, DMRS) for beam pattern measurement. Also, the transmitting/receiving sections103 may transmit DCI via a DL control channel. Also, the transmitting/receiving sections103 may transmit DL data (including higher layer control information) via a DL data channel.

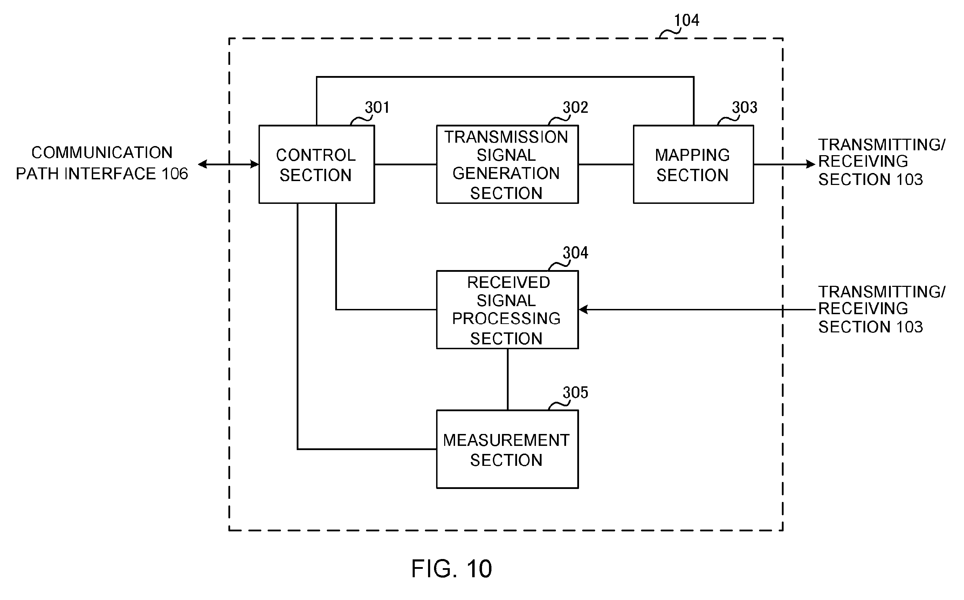

FIG. 10 is a diagram to show an example of a functional structure of a radio base station according to the present embodiment mode. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling of downlink reference signals such as system information, DL data channels, UL data channels, the CRS, the CSI-RS and the DMRS.

The control section 301 may exert control so that Tx beams and/or Rx beams are formed using digital BF (for example, precoding) by the baseband signal processing section 104 and/or analog BF (for example, phase rotation) by the transmitting/receiving sections 103.

Based on at least one of information about beams in which a plurality of DL control channel candidates are provided in the search space (beam information), the number of DL control channel candidates provided in the beams, and the number of beams, the control section 301 may determine the resource units to constitute each of these multiple DL control channel candidates (first aspect).

Also, the control section 301 may control the transmission signal generation section 302, the mapping 303,and the transmitting/receiving sections 103 to transmit at least one of the beam information, the number of DL control channel candidates and the number of beams by using higher layer signaling and/or physical layer signaling.

Note that the multiple DL control channel candidates in the search space may include a DL control channel candidate configured with a plurality of resource units of a single beam and/or a DL control channel candidate configured of a plurality of resource units of different beams.

In addition, the control section 301 may control the transmission signal generation section 302, the mapping 303 and the transmitting/receiving sections 103 to map and transmit DCI for at least one of these multiple DL control channel candidates.

In addition, the control section 301 may control beam recovery based on detection information from the user terminal 20 (second aspect). Here, this detection information may be information related to the beam in which the DL control channel candidate where the DCI is detected in the user terminal 20 is provided, and/or the DL control channel candidate.

Also, if the search space includes a first search space and a second search space, the control section 301 may provide the multiple DL control channel candidates in the second search space in different beam than a plurality of DL control channel candidates in the first search space (second aspect).

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process and the modulation process by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

When signals are received, the measurement section 305 may measure, for example, the received power (for example, RSRP (Reference Signal Received Power)), the received quality (for example, RSRQ (Reference Signal Received Quality)), SINR (Signal to Interference plus Noise Ratio) and/or the like), channel states and so on. The measurement results may be output to the control section 301.

(User Terminal)

A user terminal communicates with a radio base station using a plurality of types of beam forming, and is controlled to receive a DL signal transmitted from the radio base station and transmit a PRACH containing beam information related to the radio base station's beams. This user terminal may be controlled to transmit a PRACH containing beam information a number of times at different transmission time intervals. Also, this user terminal may apply a predetermined PRACH sequence configured in association with beam information to the transmission of multiple PRACHs. This user terminal may receive information related to the associations between beam information and PRACH sequences, and/or information about the number of times to transmit the PRACH.

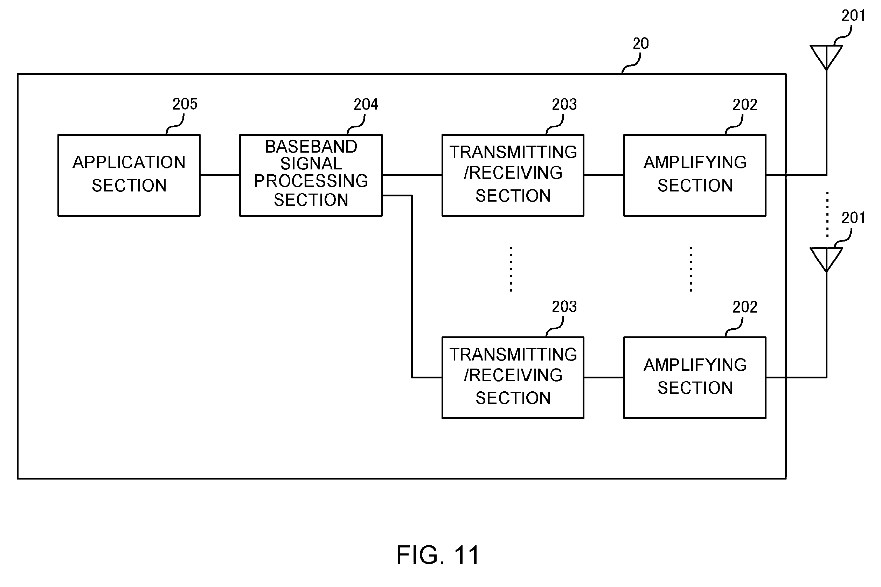

FIG. 11 is a diagram to show an example of an overall structure of a user terminal according to the present embodiment mode. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process and so on. Downlink user data is forwarded to the application section 205. The application section 205 performs processes related to higher layers above the physical layer and the MAC layer and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may furthermore have an analog beam forming section that forms analog beams. The analog beam forming section may be constituted by an analog beam forming circuit (for example, a phase shifter, a phase shifting circuit, etc.) or analog beam forming apparatus (for example, a phase shifting device) that can be described based on general understanding of the technical field to which the present invention pertains. Furthermore, the transmitting/receiving antennas 201 may be constituted by, for example, array antennas. In addition, the transmitting/receiving sections 203 are structured so as to be capable of single-BF and multiple-BF operations.

The transmitting/receiving sections 203 may receive a reference signal (for example, DMRS) for beam pattern measurement. Also, the transmitting/receiving sections 203 may receive DCI via a DL control channel. Also, the transmitting/receiving sections 203 may receive DL data (including higher layer control information) via a DL data channel.

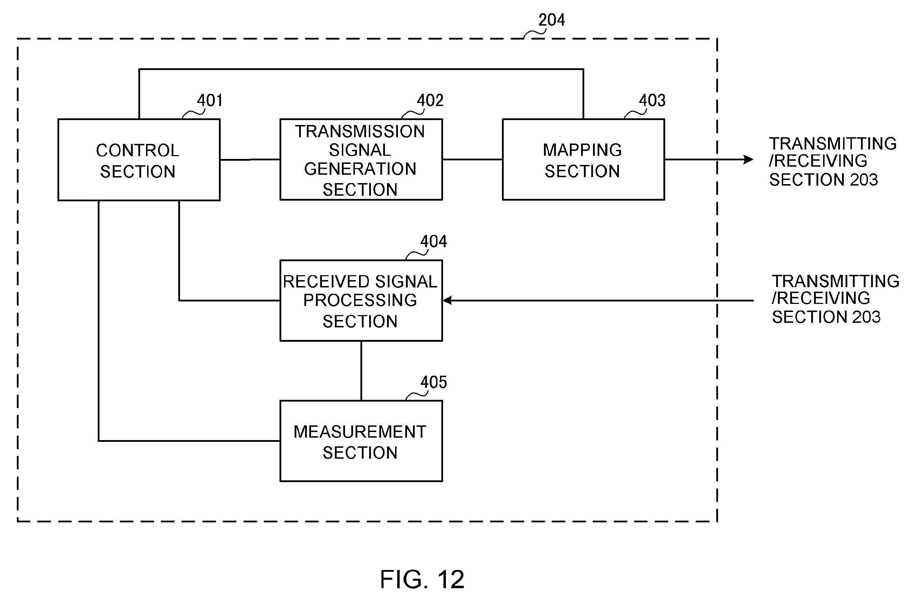

FIG. 12 is a diagram to show an example of a functional structure of a user terminal according to the present embodiment mode. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 obtains a downlink control signal (DL control channel) and a downlink data signal (DL data channel) transmitted from the radio base station 10 from the received signal processing section 404. The control section 401 controls the generation of uplink control signals (for example, delivery acknowledgement information and so on) and/or uplink data signals based on whether or not retransmission control is necessary, which is decided in response to downlink control signals and/or downlink data signals, and so on.

The control section 401 may exert control so that transmitting beams and/or receiving beams are formed using the digital BF (for example, precoding) by the baseband signal processing section 204 and/or the analog BF (for example, phase rotation) by the transmitting/receiving sections 203.

Based on at least one of information about beams in which a plurality of DL control channel candidates are provided in the search space (beam information), the number of DL control channel candidates provided in the beams, and the number of beams, the control section 401 may determine the resource units to constitute each of these multiple DL control channel candidates (first aspect). At least one of the beam information, the number of DL control channel candidates, and the number of beams may be received in the transmitting/receiving sections 203 via higher layer signaling and/or physical layer signaling.

Note that the multiple DL control channel candidates in the search space may include a DL control channel candidate configured with a plurality of resource units of a single beam and/or a DL control channel candidate configured of a plurality of resource units of different beams.

In addition, the control section 401 may monitor (blind-decode) a plurality of DL control channel candidates in the search space and detect DCI. DCI may be detected using the RNTI.

The control section 401 may also control the transmission signal generation section 402, the mapping section 403 and the transmitting/receiving sections 203 to transmit information (detection information) related to the beam in which the DL control channel candidate where the DCI is detected is provided, and/or the DL control channel candidate.

Also, the search space may include a first search space and a second search space. In this case, multiple DL control channel candidates in the second search space may be provided in different beams from multiple DL control channel candidates in the first search space (second aspect).

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals, the signals after the receiving processes and so on, to the measurement section 405.

The measurement section 405 conducts measurements with respect to the received signals. For example, the measurement section 405 performs measurements using the beam forming RS transmitted from the radio base station 10. The measurement section 405 can be constituted by a measurer, a measurement circuit or measurement apparatus that can be described based on general understanding of the technical field to which the present invention pertains.

The measurement section 405 may measure, for example, the received power (for example, RSRP), the received quality (for example, RSRQ, received SINR), the channel states and so on of the received signals. The measurement results may be output to the control section 401.

(Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

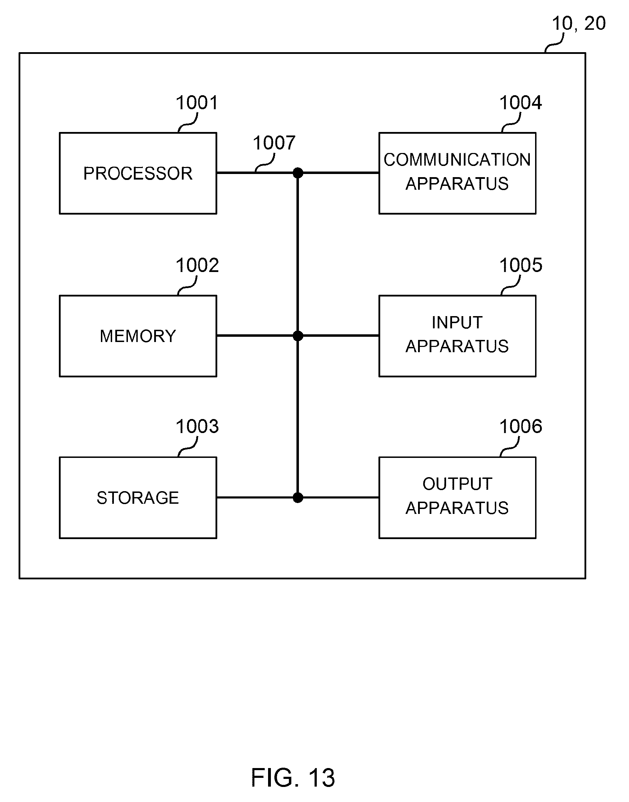

For example, the radio base station, user terminals and so on according to embodiments of the present invention may function as a computer that executes the processes of the radio communication method of the present invention. FIG. 13 is a diagram to show an example hardware structure of a radio base station and a user terminal according to the present embodiment. Physically, a radio base station 10 and a user terminal 20, which have been described, may be formed as computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) or the like. The memory 1002 can store executable programs (program codes), software modules and/or the like for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD: Frequency Division Duplex) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

(Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols (OFDM (Orthogonal Frequency Division Multiplexing) symbols, SC-FDMA (Single Carrier Frequency Division Multiple Access) symbols, and so on) in the time domain.

A radio frame, a subframe, a slot and a symbol all represent the time unit in signal communication. A radio frames, a subframe, a slot and a symbol may be each called by other applicable names. For example, one subframe may be referred to as a "transmission time interval (TTI)," a plurality of consecutive subframes may be referred to as a "TTI," or one slot may be referred to as a "TTI." That is, a subframe and a TTI may be a subframe (one ms) in existing LTE, may be a shorter period than one ms (for example, one to thirteen symbols), or may be a longer period of time than one ms.

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this. The TTI may be the transmission time unit of channel-encoded data packets (transport blocks), or may be the unit of processing in scheduling, link adaptation and so on.

A TTI having a time duration of one ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block" (PRB: Physical RB), a "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, symbols and the like described above are merely examples. For example, configurations pertaining to the number of subframes included in a radio frame, the number of slots included in a subframe, the number of symbols and RBs included in a slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals and so on can be output from higher layers to lower layers and/or from lower layers to higher layers. Information, signals and so on may be input and output via a plurality of network nodes.

The information, signals and so on that are input and/or output may be stored in a specific place (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and signals and/or combinations of these.

Physical layer signaling may be referred to as "L1/L2 (Layer 1/Layer 2) control information" (L1/L2 control signals), "L1 control information" (L1 control signal) and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network consisting of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

Note that the radio communication system 1 may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Global System for Mobile communications) (registered trademark), CDMA 2000, UMB (Ultra Mobile Broadband), IEEE 802.11 (Wi-Fi (registered trademark)), IEEE 802.16 (WiMAX(registered trademark)), IEEE 802.20, WB (Ultra-WideBand), Bluetooth (registered trademark) and other appropriate radio communication technologies, and/or may be applied to next-generation systems that are enhanced base on these radio communication technologies.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure, ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-254382, filed on December 27, 2016, including the specification, drawings and abstract, is incorporated herein by reference in its entirety.

**Claims**

1. A user terminal comprising:

   a receiving section that receives downlink control information (DCI) via a downlink (DL) control channel;
   a control section that monitors a plurality of DL control channel candidates in a search space and detects the DCI, wherein the control section determines a resource unit that constitutes each of the plurality of DL control channel candidates based on at least one of information related to a beam in which the plurality of DL control channel candidates is provided, the number of DL control channel candidates provided in the beam and the number of the beam.

2. The user terminal according to claim 1, wherein the receiving section receives at least one of the information related to the beam in which the plurality of DL control channel candidates is provided, the number of DL control channel candidates provided in the beam and the number of beams by higher layer signaling and/or physical layer signaling.

3. The user terminal according to claim 1 or claim 2, wherein the plurality of DL control channel candidates include a DL control channel candidate comprised of a plurality of resource units of a single beam, and/or a DL control channel candidate comprised of a plurality of resource units of different beams.

4. The user terminal according to one of claim 1 to claim 3, further comprising a transmission section that transmits information related to a beam in which the DL control channel candidate where the DCI is detected is provided, and/or the DL control channel candidate.

5. The user terminal according to one of claim 1 to claim 4 wherein:

the search space includes a first search space and a second search space; and
a plurality of DL control channel candidates in the second search space are provided in a different beam from a plurality of DL control channel candidates in the first search space.

**6.** A radio communication method comprising, in a user terminal, the steps of:

receiving downlink control information (DCI) via a downlink (DL) control channel;
monitoring a plurality of DL control channel candidates in a search space and detecting the DCI; and
determining a resource unit that constitute each of the plurality of DL control channel candidates based on at least one of information related to a beam in which the plurality of DL control channel candidates is provided, the number of DL control channel candidates provided in the beam and the number of beams.

#2

#0

#1

#3

UE#2

UE#1

UE#3

DL CONTROL CHANNEL

FIG. 1A

#2

#0

#1

#3

UE#2

UE#1

UE#3

DL DATA CHANNEL

FIG. 1B

FIG. 2A

FIG. 2B

CCE PER BEAM

#0

#1

#2

#3

BI

DL CONTROL CHANNEL
CANDIDATE

FIG. 2C

CCE PER BEAM

#0
(SECOND BEST BEAM)

#1
(BEST BEAM)

#2

#3

BI

DL CONTROL CHANNEL
CANDIDATE

FIG. 3A

FIG. 3B

CCE PER BEAM

#0

#1

#2

#3

BI

DL CONTROL CHANNEL
CANDIDATE

FIG. 3C

CCE PER BEAM

#0

#1

#2

#3

BI

DL CONTROL CHANNEL
CANDIDATE

FIG. 4A

FIG. 4B

CCE PER BEAM

DL CONTROL CHANNEL
CANDIDATE

FIG. 4C

CCE PER BEAM

DL CONTROL CHANNEL
CANDIDATE

FIG. 5

FIG. 6

FIG. 7

40

CORE NETWORK

30

1

HIGHER STATION
APPARATUS

C1

10(12a)

10(12c)

C2

11

C2

BACKHAUL
LINK

C2

20

10(12b)

FIG. 8

EP 3 565 295 A1

TO HIGHER STATION
APPARATUS 30 OR TO
OTHER RADIO BASE
STATIONS 10

106
COMMUNICATION
PATH
INTERFACE

104
BASEBAND
SIGNAL
PROCESSING
SECTION

103
TRANSMITTING
/RECEIVING
SECTION

102
AMPLIFYING
SECTION

105
CALL
PROCESSING
SECTION

103
TRANSMITTING
/RECEIVING
SECTION

102
AMPLIFYING
SECTION

10

101

101

FIG. 9

FIG. 10

FIG. 11

FIG. 12

EP 3 565 295 A1

FIG. 13

## INTERNATIONAL SEARCH REPORT

| International application No. |
| --- |
| PCT/JP2017/046558 |

### A. CLASSIFICATION OF SUBJECT MATTER
Int.Cl. H04W16/28(2009.01)i, H04W72/04(2009.01)i

According to International Patent Classification (IPC) or to both national classification and IPC

### B. FIELDS SEARCHED

Minimum documentation searched (classification system followed by classification symbols)
Int.Cl. H04W16/28, H04W72/04

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2016-29832 A (HUAWEI TECHNOLOGIES CO., LTD.) 03 March 2016, paragraphs [0017]-[0059], fig. 3 & US 2014/0146775 A1, paragraphs [0035]-[0083], fig. 3 & EP 2728961 A1 & CN 102932090 A | 1-6 |
| A | JP 2015-502695 A (LG ELECTORNICS INC.) 22 January 2015, paragraphs [0052]-[0054] & US 2014/0307700 A1, paragraphs [0056]-[0058] & EP 2779495 A1 & CN 104040919 A | 5 |
| A | ZTE CORPORATION, ZTE Microelectronics, Discussion on Control Channel Design for NR MIMO, 3GPP TSG-RAN WG1#86 R1-166217, 26 August 2016, section 4 | 1-6 |

☐ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 March 2018 (06.03.2018) | 20 March 2018 (20.03.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016254382 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS36.300 V8.12.0,* April 2010